# EUROPEAN PATENT SPECIFICATION

(11) **EP 2 589 835 B1**
(45) Date of publication and mention of the grant of the patent: **21.02.2018**
(21) Application number: 12789475.6
(22) Date of filing: 08.05.2012
(51) Int. Cl.: F16H 7/08, F02B 67/06

(54) **TENSION-APPLYING MEMBER, TENSION-APPLYING-MEMBER ASSEMBLY, ENGINE, AND SADDLE-TYPE VEHICLE**
SPANNUNGSANWENDUNGSELEMENT, ANORDNUNG AUS SPANNUNGSANWENDUNGSELEMENTEN, MOTOR UND SATTELFAHRZEUG
ÉLÉMENT CONFÉRANT UNE FORCE DE TENSION AINSI QUE CORPS DE MONTAGE ASSOCIÉ, MOTEUR, ET VÉHICULE À SELLE

(30) Priority: 20.05.2011 JP 2011114094
(43) Date of publication of application: 08.05.2013
(73) Proprietor: Yamaha Hatsudoki Kabushiki Kaisha, Iwata-shi, Shizuoka 438-8501 (JP)
(72) Inventor: INOMORI, Toshinori, Iwata-shi Shizuoka 438-8501 (JP); NAKAJIMA, Akitoshi, Iwata-shi Shizuoka 438-8501 (JP)
(74) Representative: Grünecker Patent- und Rechtsanwälte PartG mbB
(86) International application number: PCT/JP2012/061764
(87) International publication number: WO 2012/160960

(56) References cited:
- EP-A1- 1 096 174
- EP-A2- 1 323 949
- JP-A- 2001 153 192
- JP-A- 2003 314 637
- JP-A- 2004 028 346
- JP-A- 2008 002 669
- JP-A- 2008 249 109
- JP-A- 2009 228 673
- US-A1- 2002 107 096

## Description

### TECHNICAL FIELD

The present invention relates to a tensioning member, a tensioning member assembly, an engine and a straddle type vehicle, and more particularly to a tensioning member for tensioning a cam chain provided in an engine, a tensioning member assembly, an engine and a straddle type vehicle including such a tensioning member.

### BACKGROUND ART

Motorcycles, which are a type of straddle type vehicles, are known. An engine included in a motorcycle is disclosed in JP 2009-228673 A, for example. In the engine of JP 2009-228673 A, motive power from the crankshaft is transmitted to the camshaft via a cam chain.

The cam chain is disposed in a chain room. The chain room is formed along a crankcase, cylinder body and cylinder head. The cam chain is tensioned so as not to go slack. The engine of JP 2009-228673 A includes a tensioner that presses a chain guide onto the cam chain. The tensioner tensions the cam chain.

The cam chain may be attached to the engine in the following way: with the cylinder body and cylinder head not being attached to the crankcase, the cam chain is wound around the sprocket attached to the crankshaft. Then, the cam chain guide is attached to the cylinder body before the cylinder body is attached to the crankcase. The cylinder head is attached to the cylinder body, and the cam chain is wound around the sprocket that is to be attached to the camshaft. The sprocket for the camshaft is fixed onto the camshaft. Finally, the tensioner is attached to the cylinder head to tension the cam chain.

### DISCLOSURE OF THE INVENTION

The engine of JP 2009-228673 A includes a tensioner in addition to a cam chain guide, meaning a greater number of parts. To reduce the number of parts, a blade tensioner that serves as both a tensioner and a cam chain guide may be used. In such implementations, a blade tensioner is attached in a stage in which a cam chain guide would be attached. In such implementations, the blade tensioner already tensions the cam chain when the blade tensioner is attached. In such an arrangement, it is difficult to wind the cam chain around the sprocket for the camshaft due to the tension applied to the cam chain at this time.

Some cylinder bodies may have a side that can be opened and closed. If a cylinder body has a side that can be opened, this side of the cylinder body and cylinder head may be opened to support the blade tensioner such that the cam chain is not tensioned when the cam chain is attached, for example. However, most engines of straddle type vehicles include a cylinder body that does not have a side that can be opened. In such implementations, it is difficult to attach the cam chain, as discussed above.

An object of the present invention is to provide an arrangement using a blade tensioner to tension the cam chain where a tensioner and the cam chain can be easily attached to an engine including a cylinder body that does not have a side that can be opened.

The tensioning member according to the present invention is a tensioning member locatable within a chain room for tensioning a chain, the chain room including a cylindrical portion formed at least partially by a cylinder body, the chain capable of transmitting motive power from a crankshaft to a camshaft, the tensioning member including a leaf spring and a contact member. The leaf spring is curved when no external force is applied thereto. The contact member supports the leaf spring. The contact member includes a contact/support portion, a first end portion, a second end portion and a jig mounting portion. The contact/support portion extends along the leaf spring and is in contact with the leaf spring. The first end portion supports one end of the leaf spring. The second end portion supports another end of the leaf spring. A jig is mounted to the jig mounting portion for reducing a curvature of the leaf spring. The jig mounting portion positions at least a portion of the jig outside the cylindrical portion when the tensioning member is located in the cylindrical portion with the jig mounted to the jig mounting portion.

Mounting the jig to the tensioning member prevents the tensioning member from tensioning the chain. Thus, while the chain is being attached, the supported portion of the tensioning member does not prevent the worker from attaching the chain, making it easier to attach the chain. Even if the engine includes a cylinder body that does not have a side that can be opened, the chain can be easily attached to the engine since the tensioning member can be handled at the crankcase.

### BRIEF DESCRIPTION OF THE DRAWINGS

[FIG. 1] FIG. 1 is a left side view of an entire motorcycle according to an embodiment of the present invention.
[FIG. 2] FIG. 2 is a cross-sectional view of a front portion of the power unit as viewed from above.
[FIG. 3] FIG. 3 is a cross-sectional view of a rear portion of the power unit as viewed from above.
[FIG. 4] FIG. 4 is a cross-sectional view of the power transmitting mechanism as viewed from above.
[FIG. 5] FIG. 5 is a left side view of the power transmitting mechanism.
[FIG. 6] FIG. 6 is a partial enlarged plan view of the tensioner.
[FIG. 7] FIG. 7 is a plan view of the jig.
[FIG. 8] FIG. 8 is a side view of the jig.
[FIG. 9] FIG. 9 is a side view of the tensioner to which the jig is mounted.
[FIG. 10] FIG. 10 is a plan view of the tensioner and jig where no external force is applied to any of them.
[FIG. 11] FIG. 11 is a left side view of the chain room into which the tensioner is inserted with the jig mounted thereto.
[FIG. 12] FIG. 12 illustrates the distance between the support hole and the end of the tensioner that includes the contact portion.
[FIG. 13] FIG. 13 illustrates a contact portion of a tensioner according to another embodiment.

### BEST MODES FOR CARRYING OUT THE INVENTION

Now, a motorcycle 10 according to an embodiment of the present invention will be described with reference to the drawings. The present embodiment illustrates the motorcycle 10 as a scooter-type motorcycle. The same or corresponding parts in the drawings are labeled with the same numerals and their description will not be repeated.

### <Overall Configuration>

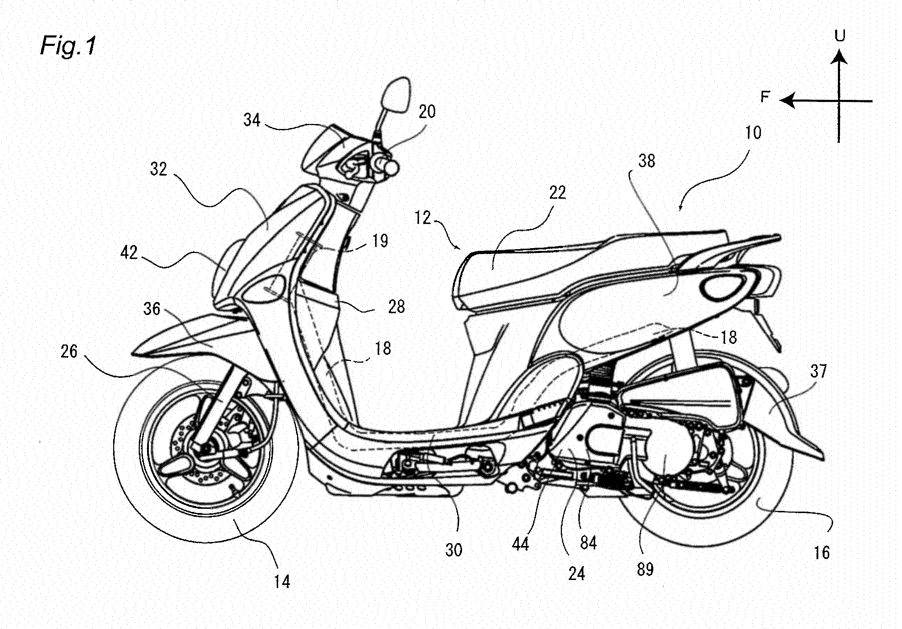

FIG. 1 is a left side view of the motorcycle 10 according to an embodiment of the present invention. In the following description, the directions "front/forward", "rear(ward)", "left" and "right" mean directions as perceived by a rider sitting on the seat 22 of the motorcycle 10. In some drawings, arrow "F" indicates the forward direction with respect to the motorcycle 10, and arrow "U" indicates the upward direction with respect to the motorcycle 10.

The motorcycle 10 includes a vehicle body 12, a front wheel 14 provided in a front portion of the motorcycle 10, and a rear wheel 16 provided in a rear portion of the motorcycle 10.

The vehicle body 12 generally includes a vehicle body frame 18, handlebars 20, a seat 22 and a power unit 24.

The body frame 18 supports the power unit 24 and seat 22. In FIG. 1, the body frame 18 is shown in broken lines. The body frame 18 includes a head pipe 19. A steering shaft is rotatably inserted into the head pipe 19. The handlebars 20 are attached to the top end of the steering shaft. A front fork 26 is attached to the both sides of the steering shaft. The front wheel 14 is rotatably attached to the bottom end of the front fork 26. The body frame 18 is made of a rigid metal such as steel.

The body frame 18 is covered with a vehicle body cover 28. The body cover 28 is made of resin. The body cover 28 includes a footboard 30, front cover 32, handle cover 34, front fender 36, rear fender 37 and side covers 38.

The footboard 30 is provided below the seat 22. The footboard 30 extends in a front-to-rear direction.

The front cover 32 is located forward of the seat 22. The front cover 32 covers the head pipe 19. A headlight 42 is located on the front cover 32.

The handle cover 34 covers part of the handlebars 20. The handle cover 34 is provided above the front cover 32. A panel that displays measuring instruments such as a speedometer, not shown, is attached to the handle cover 34.

The front fender 36 is located above the front wheel 14. The front fender 36 is located below the front cover 32. The front fender 36 projects forward from the front cover 32.

The side covers 38 are provided below the seat 22. The side covers 38 are located above the rear wheel 16. The rear fender 37 is located above the rear wheel 16. The side covers 38 extend rearward from below the seat 22.

The handlebars 20 are located forward of a rider sitting on the seat 22. The handlebars 20 extend to the left and right. A grip that can be grasped by the rider is located on each end of the handlebars 20.

The seat 22 is located above the power unit 24. A storage space that can store an object, such as a helmet, is provided below the seat 22.

The power unit 24 is located in the vicinity of the rear wheel 16. The power unit 24 is supported by the body frame 18, the power unit being swingable in a top-to-bottom direction with respect to the body frame. An engine 44, crankcase 84 and transmission case 89, included in the power unit 24, are not covered with the body cover 28. Details of the power unit 24 will be described below.

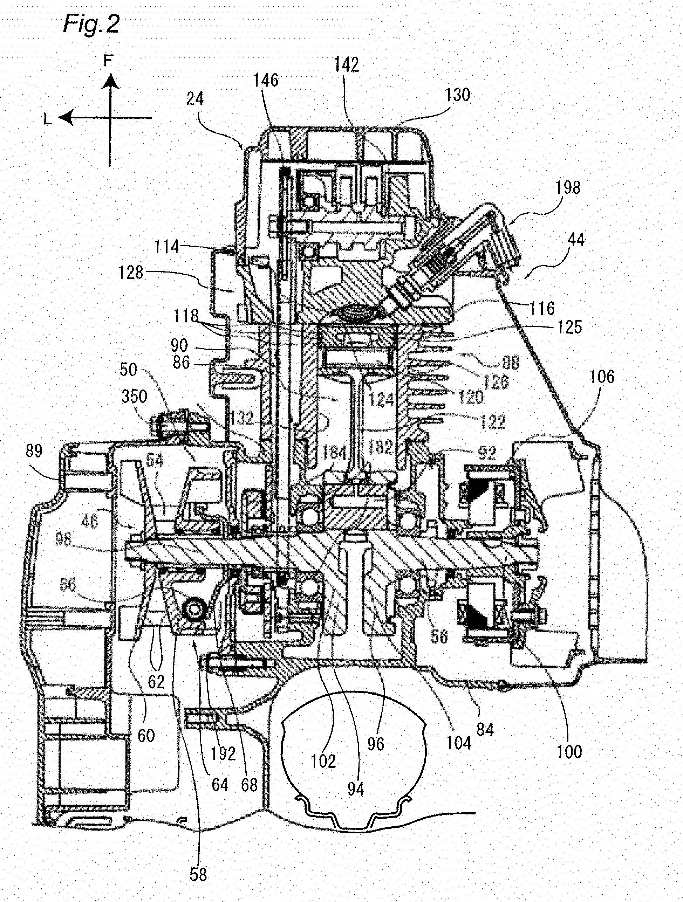

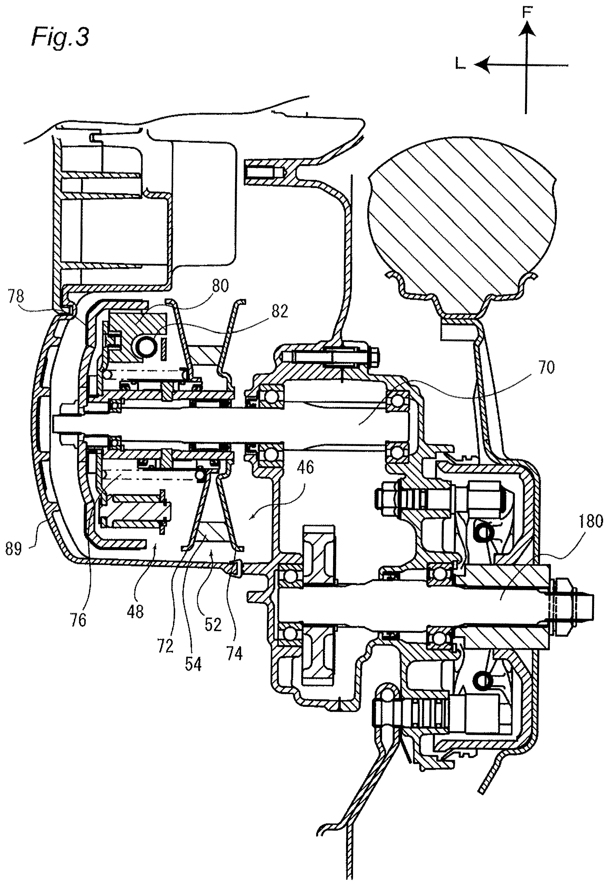

Next, the power unit 24 will be described with reference to FIGS. 2 and 3. FIG. 2 is a cross-sectional view of the engine 44 and crankcase 84 of the power unit 24 as viewed from above. FIG. 3 is a cross-sectional view of part of the transmission 46 of the power unit 24 as viewed from above. FIG. 3 shows components located rearward of those of FIG. 2. In FIGS. 2 and 3, arrow "F" indicates the forward direction with respect to the vehicle, and arrow "L" indicates the left direction with respect to the vehicle.

The power unit 24 is a swingarm-type power unit. The power unit 24 generally includes an engine 44 (FIG. 2), a transmission 46 (FIGS. 2 and 3) located to the left of the engine 44 and a centrifugal clutch 48 (FIG. 3) located to the left of the transmission 46.

The transmission 46 is a continuously variable transmission using a V-belt 54. The transmission 46 includes a driving pulley 50, a driven pulley 52 and the V-belt 54.

As shown in FIG. 2, the driving pulley 50 is attached to the left end of the crankshaft 56 in the engine 44. The driving pulley 50 includes a first driving pulley portion 58 and second driving pulley portion 60. The first driving pulley portion 58 is located opposite the second driving pulley portion 60. The second driving pulley portion 60 is located to the left of the first driving pulley portion 58. Each of the first and second driving pulley portions 58 and 60 has a sloping surface 62, the sloping surfaces being gradually separated from each other as they go toward their peripheries. A distance control mechanism 64 for controlling the distance between the first and second driving pulley portions 58 and 60 is provided for the driving pulley 50.

The distance control mechanism 64 includes a plurality of weight rollers 66 and a disk member 68 provided to the right of the first driving pulley portion 58. The disk member 68 is made of a rigid material. As the weight rollers 66 move toward the periphery of the pulley, the weight rollers 66 move the first driving pulley portion 58 toward the second driving pulley portion 60.

The driven pulley 52 will be described with reference to FIG. 3. FIG. 3 illustrates the centrifugal clutch 48 and part of the transmission 46.

Power is transmitted from the driving pulley 50 to the driven pulley 52 such that the driven pulley is rotated. The driven pulley 52 is attached to a first output shaft 70 positioned parallel to the crankshaft 56. The driven pulley 52 includes a first driven pulley portion 72 and a second driven pulley portion 74 located to the right of the first driven pulley portion 72. A spring 76 supported by a plate of the centrifugal clutch 48 applies a force to the first driven pulley portion 72 toward the right in FIG. 3 such that the first driven pulley portion 72 approaches the second driven pulley portion 74.

The V-belt 54 transmits power from the driving pulley 50 to the driven pulley 52. The V-belt 54 wrapped around the driving pulley 50 and the driven pulley 52. More particularly, the V-belt 54 is sandwiched by the first and second driving pulley portions 58 and 60 and sandwiched by the first and second driven pulley portions 72 and 74.

The centrifugal clutch 48 is connected with the left side of the driven pulley 52 of the transmission 46. The centrifugal clutch 48 is provided on one end of the first output shaft 70. The centrifugal clutch 48 generally includes a clutch housing 78, clutch shoe 80 and clutch spring 82. As the rotational rate of the driving pulley 50 increases, the rotational rate of the clutch shoe 80 increases, as well. The clutch shoe 80 is pressed against the clutch housing 78 by a centrifugal force such that the torque of the clutch shoe 80 is transmitted to the clutch housing 78. The power transmitted to the clutch housing 78 is transmitted to the first output shaft 70 connected with the clutch housing 78.

A second output shaft 180, to which the rear wheel 16 is connected, is located rearward of the first output shaft 70. Power can be transmitted between the first and second output shafts 70 and 180 via gears, not shown.

### <Engine>

Next, the engine 44 will be described in detail, mainly with reference to FIG. 2.

The engine 44 generates motive power for the motorcycle 10. The engine 44 is an air-cooled engine. The engine 44 generally includes a crankshaft 56, crankcase 84, cylinder 88, piston 86 and power transmitting mechanism 90. The piston 86 is located forward of the crankshaft 56. The power transmitting mechanism 90 is located to the left of the piston 86.

Power is transmitted from the piston 86 to the crankshaft 56 such that the crankshaft rotates. The crankshaft 56 generally includes a crankpin 92, first crank web 94, second crank web 96, first crankshaft portion 98 and second crankshaft portion 100.

The crankpin 92 connects the crankshaft 56 with a connecting rod 122 of the piston 86.

The first crank web 94 supports the crankpin 92. A weight 102 is provided on the first crank web 94 for reducing inertia generated by vibrations of the piston 86 and connecting rod 122. The first crank web 94 is plate-shaped.

The second crank web 96 supports the crankpin 92. The second crank web 96 is located opposite the first crank web 94. A weight 104 is provided on the second crank web 96 for reducing inertia generated by vibrations of the piston 86 and connecting rod 122. The second crank web 96 is plate-shaped.

The first crankshaft portion 98 is connected with the first crank web 94. The first crankshaft portion 98 extends from the first crank web 94 in a direction generally perpendicular thereto. The driving pulley 50 of the transmission 46 is provided on an end of the first crankshaft portion 98.

The second crankshaft portion 100 is connected with the second crank web 96. The second crankshaft portion 100 extends from the second crank web 96 in a direction generally perpendicular thereto. A generator 106 is provided on an end of the second crankshaft portion 100. The generator 106 generates electric power.

The crankcase 84 supports the crankshaft 56 via bearings. A transmission case 89 containing the transmission 46 and other components is located rearward of the crankcase 84. The crankcase 84 is connected with the transmission case 89 by means of a bolt 350.

The cylinder 88 guides the piston 86 such that the piston reciprocates in a rectilinear manner. The cylinder 88 includes a cylinder body 126, cylinder head 128 and head cover 130.

A cylinder bore 132 having a circular cross-section is provided in the cylinder body 126. The piston 86 is located in the cylinder bore 132 of the cylinder body 126. The cylinder bore 132 guides the direction of travel of the piston 86. The cylinder body 126 is attached to the crankcase 84.

The cylinder head 128 is attached to the cylinder body 126. More particularly, the cylinder head 128 is located on the end of the cylinder body 126 opposite that with the crankcase 84. The cylinder head 128 has walls which define a combustion chamber 114, which is in communication with the cylinder bore 132 of the cylinder body 126. The combustion chamber 114 has a plurality of holes (not shown) that are in communication with the outside of the combustion chamber 114. Valves, not shown, are provided in these holes and can be driven when air is to be taken into, and discharged from, the combustion chamber 114. A fuel supply device, not shown, is attached to the combustion chamber 114 for supplying fuel. An ignition device 198 is attached to the cylinder head 128 for igniting mixed air in the combustion chamber 114. A camshaft 142 is located on the cylinder head 128 for driving the valves on the combustion chamber 114.

The piston 86, together with the cylinder head 128 of the engine 44, defines the combustion chamber 114. The piston 86 receives pressure from combustion gas in the combustion chamber 114 to rotate the crankshaft 56. The piston 86 is attached to the crankshaft 56. The piston 86 includes a piston head 116, piston rings 118, piston pin 120 and connecting rod 122.

The piston head 116 includes a disk-shaped end face 124 and a cylindrical portion 125 extending rearward from the periphery of the end face 124, perpendicularly thereto. A piston boss, into which the piston pin 120 can be inserted, is formed on a side of the piston head 116. Three ring grooves, into which the piston rings 118 can be inserted, are formed on the piston head 116, forward of the piston boss. Valve recesses are formed on the end face 124 of the piston head 116.

The piston rings 118 include two compression rings and an oil ring. The compression rings are inserted into the two of the ring grooves that are closer to the end face 124. The oil ring prevents mixed air and/or combustion gas from leaking out of the gap between the piston 86 and the cylinder body 126 of the cylinder 88. The oil ring scrapes oil off the guide wall of the cylinder body 126.

The piston pin 120 is inserted into the piston boss of the piston head 116 and connects the connecting rod 122 with the piston head 116.

The connecting rod 122 transmits motion of the piston head 116 to the crankshaft 56. The connecting rod 122 is connected with the piston head 116 and crankshaft 56. Each end of the connecting rod 122 has a cylindrical hole, into which the crankpin 92 or piston pin 120 can be inserted.

The head cover 130 is attached to a front portion of the cylinder head 128 via a bolt. The head cover 130 covers a space in which the camshaft 142 and other components are located.

The power transmitting mechanism 90 transmits power from the crankshaft 56 to the camshaft 142 to drive the valves on the combustion chamber 114. Details of the power transmitting mechanism 90 will be described below.

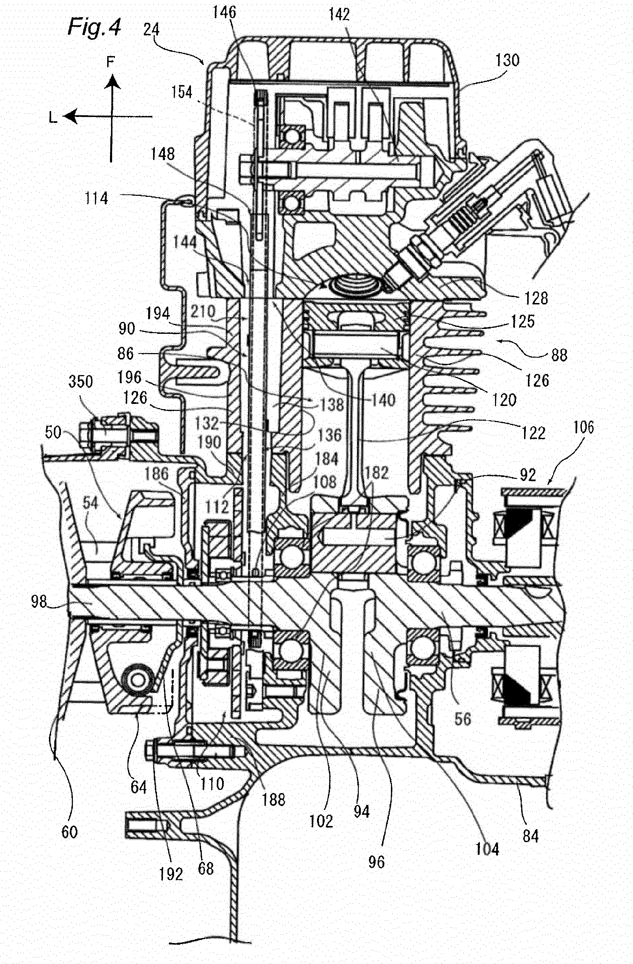

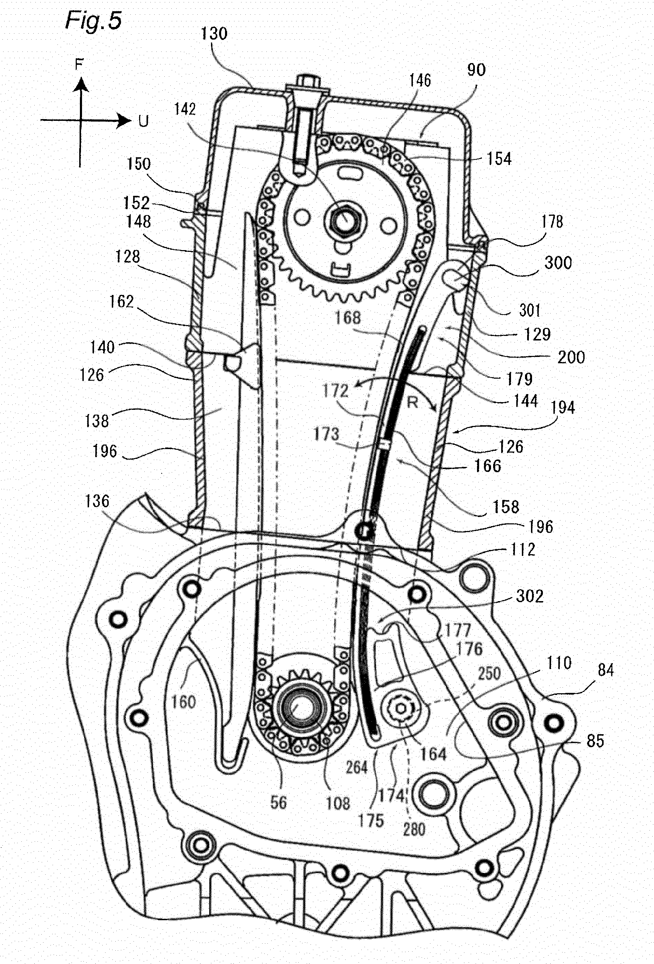

The power transmitting mechanism 90 will be described with reference to FIGS. 4 and 5. FIG. 4 is an enlarged cross-sectional view of some of the components shown in FIG. 2 as viewed from above. FIG. 5 is a partial cross-sectional view of the chain room 210 of FIG. 4 as viewed from the left. In FIG. 4, arrow "F" indicates the forward direction with respect to the vehicle, and arrow "L" indicates the left direction with respect to the vehicle. In FIG. 5, arrow "F" indicates the forward direction with respect to the vehicle, and arrow "U" indicates the upward direction with respect to the vehicle.

As shown in FIGS. 4 and 5, the power transmitting mechanism 90 includes a chain room 210, first sprocket 108, second sprocket 146, cam chain 154, chain guide 156 and tensioner 158.

The chain room 210 is provided to the left of the piston 86. The chain room 210 contains the first sprocket 108, second sprocket 146, cam chain 154, chain guide 156 and tensioner 158. The chain room 210 includes a first subroom 110 provided in the crankcase 84, a second subroom 138 provided in the cylinder body 126 and a third subroom 148 provided in the cylinder head 128.

The first subroom 110 contains the first sprocket 108. The first subroom 110 extends in a direction perpendicular to the paper in FIG. 4 (top-to-bottom direction). In other words, the first subroom 110 extends in a direction perpendicular to a plane containing the crankshaft 56 and camshaft 142. The first subroom 110 is surrounded by a first wall 184, second wall 186, third wall 188, fourth wall 190 and other components. Further, upper and lower portions of the first subroom 110 are covered with the crankcase 84. A bearing 182 is attached to the first wall 184 for supporting the first crankshaft portion 98. The second wall 186 is located to the right of the driving pulley 50. The third wall 188 connects the first wall 184 with the second wall 186. The fourth wall 190 has a first opening 112 exposing the first subroom 110. The fourth wall 190 is located forward of the first subroom 110. The second wall 186 is connected with the third wall 188 and fourth wall 190 by means of a bolt 192.

The second subroom 138 is formed within the cylindrical portion 194 of the cylinder body 126. A second opening 136 in alignment with the first opening 112 is formed on one end of the cylindrical portion 194. A third opening 140 exposing the second subroom 138 is formed on the other end of the cylindrical portion 194. The first and second subrooms 110 and 138 are connected with each other via the first and second openings 112 and 136. In other words, the first subroom 110 is connected with the second subroom 138 via one end of the cylindrical portion 194. The second subroom 138 is located to the left of the cylinder bore 132. The second subroom 138 has a rectangular cross section. The second subroom 138 is surrounded by the wall 196 of the cylindrical portion 194 and other components. The cylindrical portion 194 is only open at the one end and the other end. That is, the cylindrical portion 194 is only in communication with the outside of the second subroom 138 at the one end and the other end.

The third subroom 148 contains the second sprocket 146 attached to an end of the camshaft 142. A fourth opening 144 in alignment with the third opening 140 is formed at a rear portion of the cylinder head 128. The second and third subrooms 138 and 148 are connected with each other via the third and fourth openings 140 and 144. That is, the third subroom 148 is connected with the second subroom 138 via the other end of the cylindrical portion 194.

The head cover 130 and cylinder head 128 include a positioning mechanism. The positioning mechanism prevents the head cover 130 and cylinder head 128, as put together, from being misaligned when the head cover 130 is mounted on the cylinder head 128 but not fixed thereto by a bolt. The positioning mechanism is composed of a projection 150 provided on the face of the cylinder head 128 that may contact the head cover 130 and a depression 152 provided in the face of the head cover 130 that may contact the cylinder head 128. The depression 152 is formed opposite the projection 150 of the cylinder head 128. The projection 150 may fit into the depression 152. In the present embodiment, the projection 150 is formed on the cylinder head 128 while the depression 152 is formed in the head cover 130; alternatively, however, a depression may be formed in the cylinder head 128 while a projection may be formed on the head cover 130.

The first sprocket 108 is attached to the first crankshaft portion 98. The first sprocket 108 is adjacent the first crank web 94. The first sprocket 108 is shaped like a disk.

The second sprocket 146 is shaped like a disk with a diameter greater than that of the first sprocket 108. The second sprocket 146 is attached to an end of the camshaft 142 by means of a bolt.

The cam chain 154 transmits power from the first sprocket 108 to the second sprocket 146. The cam chain 154 is wound around the first and second sprockets 108 and 146. The cam chain 154 is disposed in, and runs through, the first subroom 110, second subroom 138 and third subroom 148. In the present embodiment, the cam chain 154 is a silent chain.

The chain guide 156 guides the cam chain 154. The chain guide 156 is disposed in, and extends through, the first subroom 110, second subroom 138 and third subroom 148. The chain guide 156 is supported by a first guide support 160 contained in the crankcase 84 and a second guide support 162 attached to the cylinder body 126. The second guide support 162 is provided on the chain guide 156. The chain guide 156 may be fabricated by bending a plate and baking rubber onto the bent plate. The chain guide 156 extends from the first subroom 110 toward the third subroom 148. In other words, the chain guide 156 extends in a front-to-rear direction. The chain guide 156 extends in a front-to-rear direction such that one end thereof is in the vicinity of the camshaft 142, which defines the center of rotation of the second sprocket 146. The chain guide 156 extends such that the other end thereof is in the vicinity of the crankshaft 56, which defines the center of rotation of the first sprocket 108.

The tensioner 158 tensions the cam chain 154. The tensioner 158 is disposed in, and extends through, the first subroom 110, second subroom 138 and third subroom 148. More particularly, the tensioner 158 is disposed between the cam chain 154 and a sidewall of the crankcase 84, between the cam chain 154 and a sidewall of the cylinder body 126 and between the cam chain 154 and the sidewall of the cylinder head 128. The tensioner 158 can be bent like a bow. In other words, the tensioner 158 can be curved in an arc. The tensioner 158 includes a leaf spring 166 and blade shoe 168. The tensioner 158 is attached to the crankcase 84 via a bolt 164. The tensioner 158 is swingable as viewed in a direction of the axis of the crankshaft 56. More particularly, the tensioner 158 is swingable in the directions of arrow R in FIG. 5.

The bolt 164 is disposed parallel to the crankshaft 56 and the camshaft 142. The bolt 164 is provided adjacent the rear end of the tensioner 158. The bolt 164 is fixed in an attaching hole 280 in the crankcase 84.

The leaf spring 166 receives forces from the bolt 164, the sidewall 129 of the cylinder head 128 and the cam chain 154 so as to be deformed elastically. The leaf spring 166 extends in a direction in which the first subroom 110, second subroom 138 and third subroom 148 are arranged. The leaf spring 166 is fabricated by laminating several, in the present embodiment four, elongated metal members. The leaf spring 166 can be bent like a bow. In other words, the leaf spring 166 can be curved in an arc. One end of the leaf spring 166 is located in the cylinder head 128. The other end of the leaf spring 166 is located in the crankcase 84.

The blade shoe 168 may be in contact with the cam chain 154 and the sidewall 129 of the cylinder head 128. The blade shoe 168 is attached to the leaf spring 166. The blade shoe 168 supports the leaf spring 166. The blade shoe 168 is made of resin. The blade shoe 168 includes a plate portion 172, swing fulcrum portion 174, end support portion 176 and contact portion 178.

The plate portion 172 covers the side of the leaf spring 166 adjacent to the cam chain 154. The plate portion 172 is provided along the leaf spring 166. That is, the plate portion 172 extends in a direction in which the leaf spring 166 extends. The width of the plate portion 172 is generally the same as that of the leaf spring 166. As used herein, "width" means the dimension of the leaf spring measured in a direction of the axis of the crankshaft 56, i.e. a dimension in a direction perpendicular to the paper in FIG. 5. The plate portion 172 extends in a direction in which the leaf spring 166 extends. The plate portion 172 may be in contact with the cam chain 154, along a front-to-rear direction and between the first and second sprockets 108 and 146. The plate portion 172 includes a pair of edge support portions 173 for supporting the respective edges of the leaf spring 166 disposed in a width direction.

The swing fulcrum portion 174 is provided at a rear end 175 of the tensioner 158. A support hole 250, into which the bolt 164 can be inserted, is provided in the swing fulcrum portion 174. The swing fulcrum portion 174 is located in the vicinity of the first sprocket 108. The swing fulcrum portion 174 is located rearward of a portion of the first sprocket 108 in a front-to-rear direction. The bolt 164 is inserted into the support hole 250 in the swing fulcrum portion 174 and the tensioner 158 is swingably supported on the crankcase 84.

The contact portion 178 is provided at the front end 179 of the tensioner 158. The contact portion 178 extends in a front-to-rear direction. The contact portion 178 is in contact with the side of the leaf spring 166 opposite the side adjacent to the cam chain 154. The contact portion 178, together with the plate portion 172, supports the leaf spring 166 in a thickness direction. In other words, the contact portion 178 supports the upper portion of the leaf spring 166. The contact portion 178 may contact the sidewall 129 of the cylinder head 128. The contact portion 178 is located in the vicinity of the second sprocket 146. A first jig mounting portion 300 is formed in the contact portion 178. The first jig mounting portion 300 is a groove extending from one end toward the other of the contact portion disposed in a width direction of the leaf spring 166. That is, the first jig mounting portion 300 is a groove with a depth in a direction of the axis of the crankshaft 56. The first jig mounting portion 300 includes an opening 301.

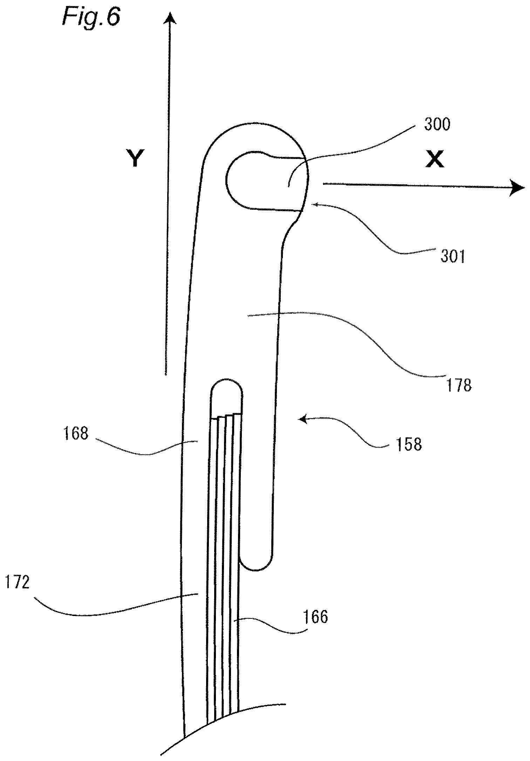

FIG. 6 is a partial expanded plan view of the tensioner 158. The opening 301 will be described with reference to FIG. 6. The opening 301 has an opening that faces in direction X, which is perpendicular to direction Y in which the leaf spring 166 extends, away from the plate portion 172 toward the leaf spring 166. That is, the opening 301 has an opening that faces in a thickness direction of the leaf spring 166. In other words, the opening 301 has an opening that faces in a direction crossing the length of the contact portion 178 as viewed in a direction of the axis of the crankshaft 56.

The end support portion 176 supports the leaf spring 166 by sandwiching the leaf spring 166 with the plate portion 172. The end support portion 176, together with the plate portion 172, supports the leaf spring 166 in a thickness direction. The end support portion 176 extends from the swing fulcrum portion 174 along the leaf spring 166. A second jig mounting portion 302 is provided adjacent the front end of the end support portion 176. The second jig mounting portion 302 has a wall surface 177 shaped in an arc as viewed in a direction of the axis of the crankshaft 56. The second jig mounting portion 302 has a depth in the rearward direction. That is, the second jig mounting portion 302 has an opening facing in a length direction of the leaf spring 166. The second jig mounting portion 302 has a depth in a direction different from the direction of the depth of the opening 301 of the first jig mounting portion 300.

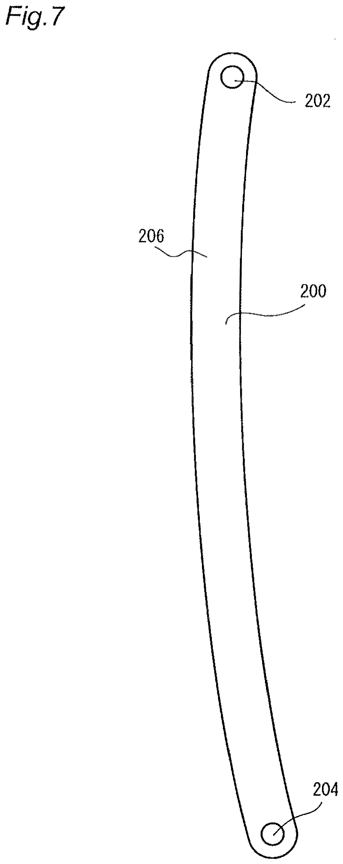

A jig 200 is used when the tensioner 158 is mounted to the engine 44. FIG. 5 illustrates the tensioner 5 as having been mounted, while the jig 200 has been removed. The jig 200 will be described with reference to FIGS. 7 to 10.

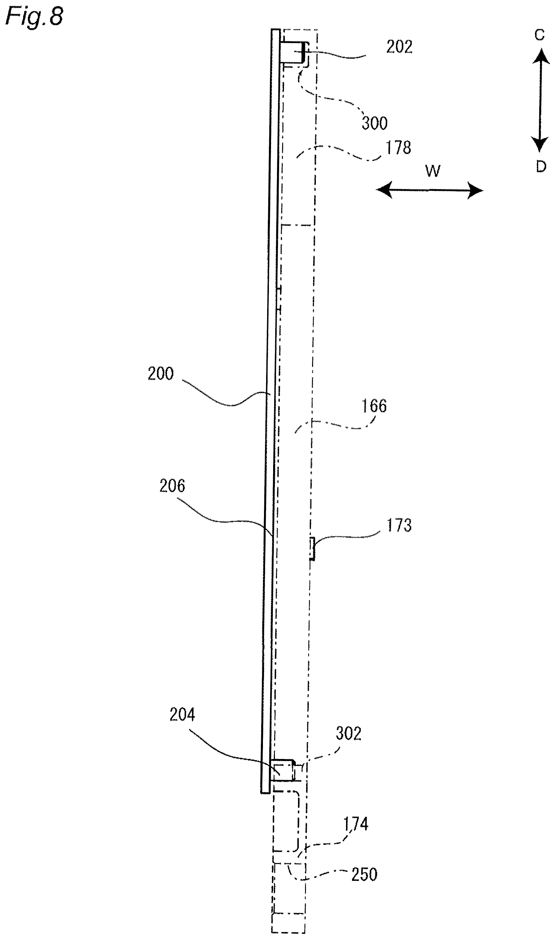

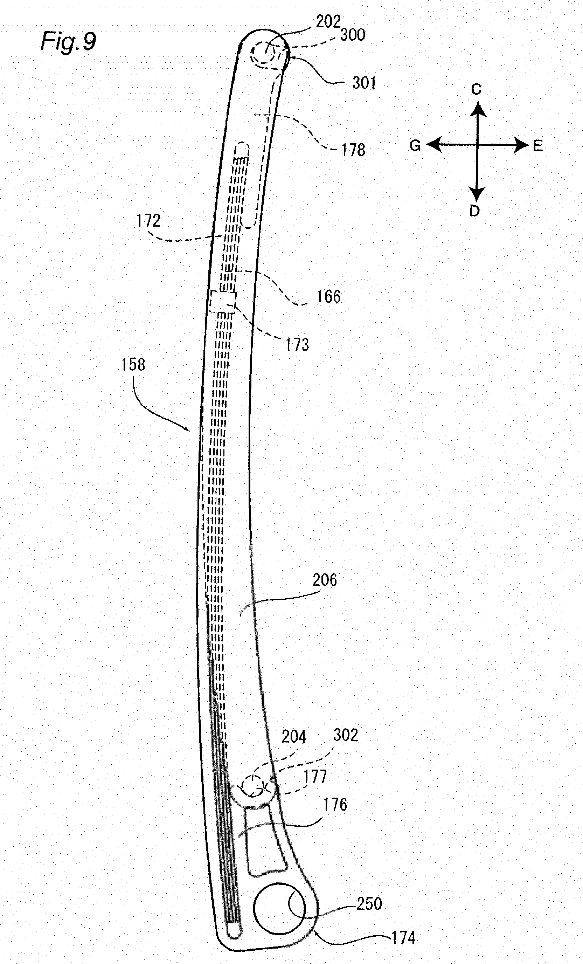

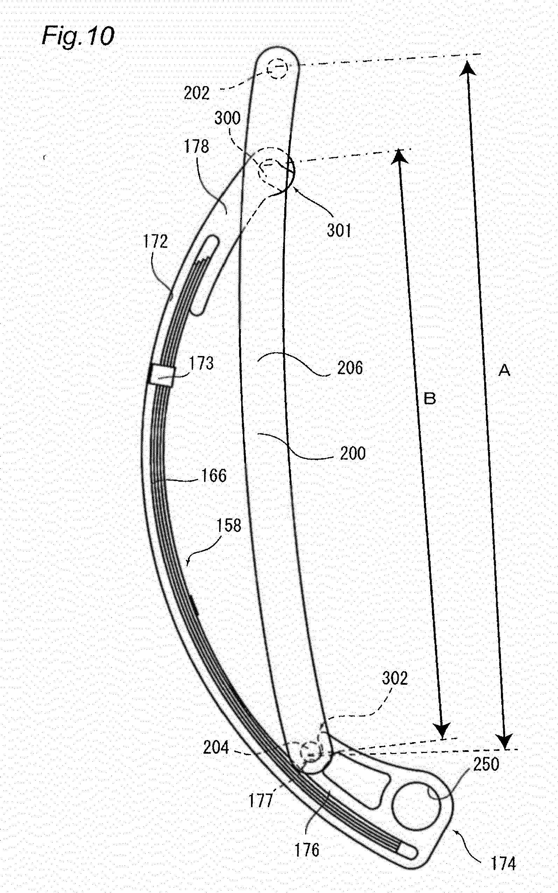

FIG. 7 is a plan view of the entire jig 200. FIG. 8 is a side view of the entire jig 200. In FIG. 8, the tensioner 158 to which the jig 200 is mounted is shown by virtual lines. FIG. 9 is a plan view of the entire tensioner 158 to which the jig 200 is mounted, and the jig 200. FIG. 10 is a plan view of the entire tensioner 158 and jig 200 where no external force is applied to any of them.

The jig 200 may be attached to the tensioner 158 to support the tensioner 158. The jig 200 includes a body portion 206, first support portion 202 and second support portion 204.

The body portion 206 is a flat plate extending in one direction. The body portion 206 is curved as viewed in a plan view. When the jig 200 is mounted to the tensioner 158, the body portion 206 is adjacent to one of the sides of the tensioner 158 disposed in a width direction of the tensioner (i.e. one of the directions of arrow W in FIG. 8) as shown in FIG. 8.

The first support portion 202 protrudes from the body portion 206. The first support portion 202 is provided adjacent one end of the body portion 206. The first support portion 202 is cylindrical. The first support portion 202 may be inserted into the first jig mounting portion 300 provided in the contact portion 178. The first jig mounting portion 300 has a depth, i.e. a dimension in a width direction of the leaf spring 166 (i.e. one of the directions of arrow W in FIG. 8) greater than that of the first support portion 202 when the jig 200 is mounted to the tensioner 158. When the jig 200 is removed from the tensioner 158, the first support portion 202 moves in a direction crossing a direction in which the contact portion 178 extends. The opening 301 has a depth in a direction that crosses a direction in which the first support portion 202 is moved when the jig 200 is removed from the tensioner 158.

The second support portion 204 protrudes from the body portion 206. The second support portion 204 is provided adjacent the other end of the body portion 206. The second portion 204 is cylindrical. The second support portion 204 is attached to the second jig mounting portion 302. As shown in FIG. 9, with the jig 200 being attached to the tensioner 158, the second support portion 204 receives forces in the directions of arrows C and G from the second jig mounting portion 302. The second support portion 204 is supported in a direction perpendicular to a direction in which the body portion 206 extends by the arc-shaped wall surface 177 of the second jig mounting portion 302. In other words, the second support portion 204 receives forces in the directions of arrows G and E from the wall surface 177.

As shown in FIG. 10, direct distance A between the first and second support portions 202 and 204 is greater than direct distance B between the first and second jig mounting portions 300 and 302 of the tensioner 158 with no external force applied thereto. Thus, as shown in FIG. 9, the tensioner 158 is extended when the jig 200 is mounted to the tensioner 158.

The tensioner 158 is significantly curved, as shown in FIG. 10, when no external force is applied thereto. When the jig 200 is mounted, the tensioner 158 is curved to a smaller degree, as shown in FIG. 9, than is the case when no force is applied to the tensioner 158. When mounted on the engine 44, the tensioner 158 receives forces from the bolt 164, the sidewall 129 of the cylinder head 128 and the cam chain 154 such that it is slightly curved. At this time, the curvature is smaller than is the case when no external force is applied to the tensioner 158 and greater than is the case when the jig 200 is mounted to the tensioner 158.

### <Operation>

Next, the operations through which power from the engine 44 may be transmitted to the rear wheel will be described.

First, the crankshaft 56 is rotated. Rotation of the crankshaft 56 causes rotation of the first sprocket 108 attached to the crankshaft 56. Power from the first sprocket 108 is transmitted to the second sprocket 146 via the cam chain 154. Rotation of the second sprocket 146 causes rotation of the camshaft 142. Rotation of the camshaft 142 opens the valves. At the same time with the opening of the valves, rotation of the crankshaft 56 drives the piston 86. Thus, air is taken into the combustion chamber 114. The combustion chamber 114 is supplied with fuel from the fuel supply device. Thereafter, rotation of the crankshaft 56 causes mixed air to be compressed, and the mixed air, composed of air and fuel, is ignited. Combustion of the mixed air causes the piston head 116 to move, causing rotation of the crankshaft 56, which opens the valves. Opening of the valves causes burned gas to be discharged from the combustion chamber 114 to the outside of the chamber 114. It should be noted that the crankshaft 56 is rotated by power from a cell motor, not shown, only when the engine 44 is started.

Rotation of the crankshaft 56 causes, through its power, rotation of the driving pulley 50 of the transmission 46. Power from the driving pulley 50 is transmitted to the driven pulley 52 via the V-belt 54. As the rotational rate of the driven pulley 52 increases, the clutch shoe 80 of the centrifugal clutch 48 contacts the clutch housing 78. Then, power from the centrifugal clutch 48 is transmitted to the first output shaft 70. Power transmitted to the first output shaft 70 is transmitted to the second output shaft 180 by gears, not shown, such that power is transmitted from the second output shaft 180 to the rear wheel 16.

### <Work Procedure for Attacking Cam Chain>

A work procedure for attaching the cam chain 154 during assembly or maintenance of the engine 44 will be described.

First, the cylinder body 126 is attached to the crankcase 84. The cylinder head 128 is attached to the cylinder body 126. This forms the chain room 210 including the first subroom 110, second subroom 138 and third subroom 148. At this stage, the bolt 350 for coupling the crankcase 84 and the transmission case 89 is not yet attached. The bolt 192 for coupling the second wall 186, third wall 188 and fourth wall 190 is not yet attached. Thus, a left portion of the first subroom 110 in FIG. 4 is not covered.

Next, the jig 200 is mounted to the tensioner 158. More particularly, the first support portion 202 is inserted into the first jig mounting portion 300 and the second support portion 204 is fitted into the second jig mounting portion 302. At this time, the first jig mounting portion 300 of the tensioner 158 receives a force in the direction of arrow C in FIGS. 8 and 9 from the first support portion 202 while the second jig mounting portion 302 receives a force in the direction of arrow D in FIGS. 8 and 9 from the second support portion 204. Thus, the tensioner 158 is curved to a small degree.

The cam chain 154 is wound around the first sprocket 108 attached to the crankshaft 56. Next, the tensioner 158 is inserted into the first subroom 110 through the opening 85 of the crankcase 84 (see FIG. 5). The tensioner 158 is inserted into the second subroom 138 of the cylinder body 126 and then the third subroom 140 of the cylinder head 128.

At this time, the tensioner 158 is inserted into the second and third subrooms 138 and 148 in such a way that the contact portion 178 defines the leading end. The swing fulcrum portion 174 of the tensioner 158 is positioned in the crankcase 84 and the support hole 250 of the swing fulcrum portion 174 is aligned with the attaching hole 280 of the crankcase 84. The bolt 164 is fitted through the support hole 250 and attaching hole 280 such that the bolt 164 is attached to the crankcase 84.

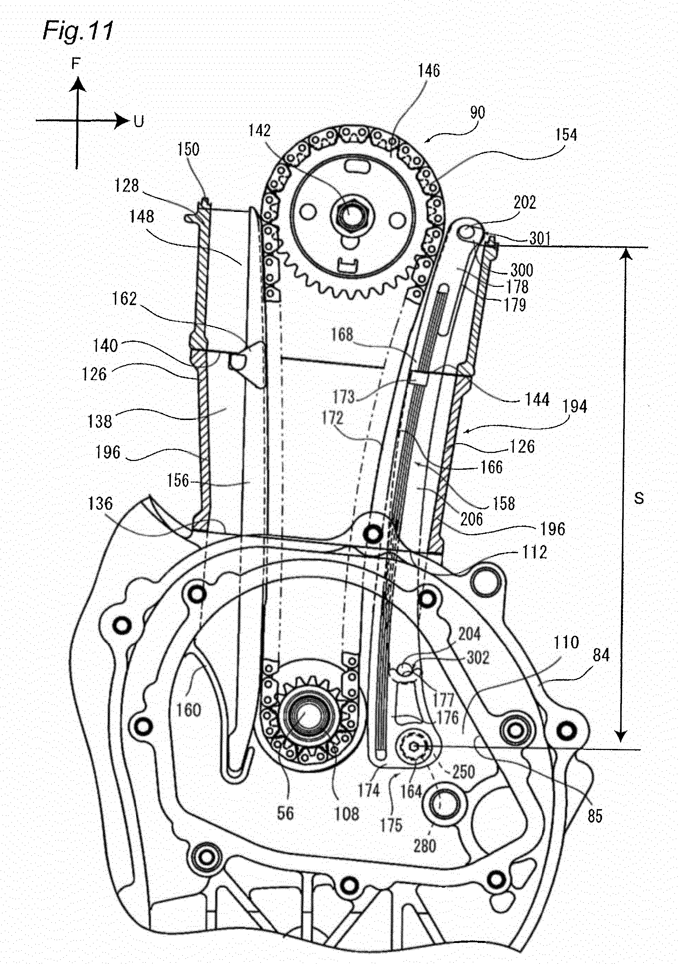

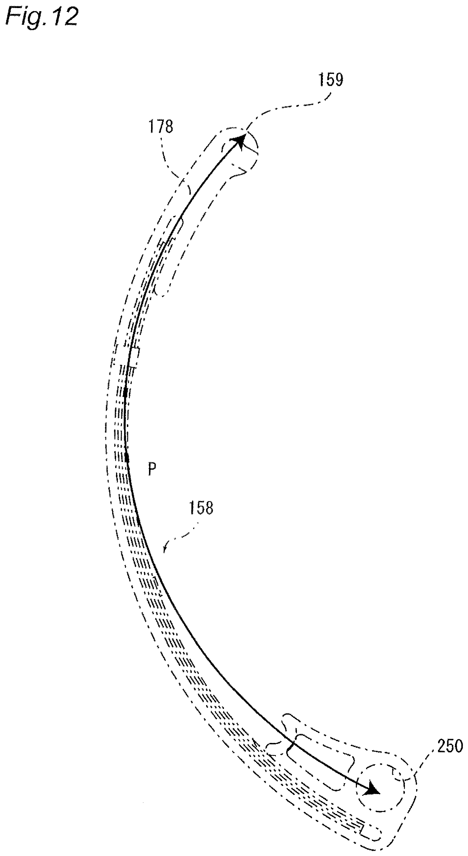

Thereafter, the cam chain 154 is wound around the second sprocket 146. The second sprocket 146, with the cam chain 154 is wound around it, is attached to the camshaft 142. At this time, the arrangement is in the state shown in FIG. 11. In the state shown in FIG. 11, an end of the tensioner 158 protrudes through the front side of the cylinder head 128. FIG. 12 illustrates length P from the support hole 250 to the front end 159 of the tensioner 158. The end 159 is the end of the tensioner that includes the support hole 250 and the contact portion 178 of the tensioner 158. Length P from the support hole 250 to the end 159 is greater than distance S, measured in a front-to-rear direction, between the support hole 250 and a portion of the cylinder head 128 that is to be in contact with the head cover 128, in the state shown in FIG. 11. As such, when the tensioner 158 to which the jig 200 is mounted is attached to the crankcase 84, an end of the tensioner 158 protrudes outside the cylinder head 128. Stated differently, the attaching hole 280 is positioned such that an end of the tensioner 158 protrudes outside the cylinder head 128 when the tensioner 158 to which the jig 200 is mounted is mounted to the crankcase 84. As shown in FIG. 11, the tensioner 158 is only curved to a small degree such that it does not tension the cam chain 154. This achieves that the cam chain 154 is wound around the second sprocket.

The jig 200 is then removed from the tensioner 158. Specifically, the first support portion 202 is drawn out of the first jig mounting portion 300. More particularly, the first support portion 202 is slid out of the opening 301 of the first jig mounting portion 300 in the direction of arrow E in FIG. 9. Then, the second support portion 204 is removed from the second jig mounting portion 302. At this time, the tensioner 158 is deformed to tension the cam chain 154, as shown in FIG. 5. Finally, the head cover 130 is attached to the cylinder head 128.

### <Other Embodiments>

In the illustrated embodiment, the first support portion 202 is moved out of the opening 301 of the first jig mounting portion 300 when the jig 200 is removed from the tensioner 158; however, the present invention is not limited to such a configuration and the tensioner may be drawn out in a direction perpendicular to the paper in FIG. 5 (a left-to-right direction), for example.

Although the illustrated embodiment has described a motorcycle 10 with one cylinder 88, the present invention is not limited to such a configuration and may be used in a motorcycle with several cylinders.

Although the illustrated embodiment has described a motorcycle 10 with one camshaft 142, the present invention is not limited to such a configuration and may be used in a motorcycle with two camshafts.

Although the illustrated embodiment has described a two-wheeled motorcycle, the present invention is not limited to such a configuration and may be used in a straddle type vehicle with three or four wheels.

Although the illustrated embodiment has described a type of engine using a head cover, the present invention is not limited to such a configuration and may be used with a type of engine that does not use a head cover.

In the illustrated embodiment, the first and second support portions 202 and 204 are located adjacent the ends of the body portion 206; however, the present invention is not limited to such a configuration and a rear portion of the body portion 206 may be further extended rearward, for example. In such implementations, the rear end of the body portion 206 may be grasped, allowing the tensioner to be easily removed.

In the illustrated embodiment, the first jig mounting portion 300 includes an opening 301 facing a direction that crosses a direction in which the tensioner 158 extends and extending in the direction of arrow E in FIG. 9; however, the present invention is not limited to such a configuration and may include an opening facing a direction that crosses a direction in which the tensioner 158 extends and extending in the direction of arrow G in FIG. 9.

In the illustrated embodiment, the first jig mounting portion 300 is a groove with a depth in a direction of the axis of the crankshaft 56; however, the present invention is not limited to such a configuration and the first jig mounting portion 300 may extend through the tensioner in a direction of the axis of the crankshaft 56.

In the illustrated embodiment, the jig 200 is mounted to the tensioner 158 after the chain room 210 is formed; however, the present invention is not limited to such a procedure and the jig 200 may be mounted to the tensioner 158 before the chain room 210 is formed.

In the illustrated embodiment, the swing fulcrum portion 174 is positioned in the crankcase 84 and fixed thereto via a bolt 164; however, the present invention is not limited to such a configuration and the swing fulcrum portion may be attached to the cylinder head 128 or head cover 130 and the contact portion 178 may be positioned in the crankcase 84, for example. In such implementations, a pin for supporting the contact portion 178 must be attached to the crankcase 84.

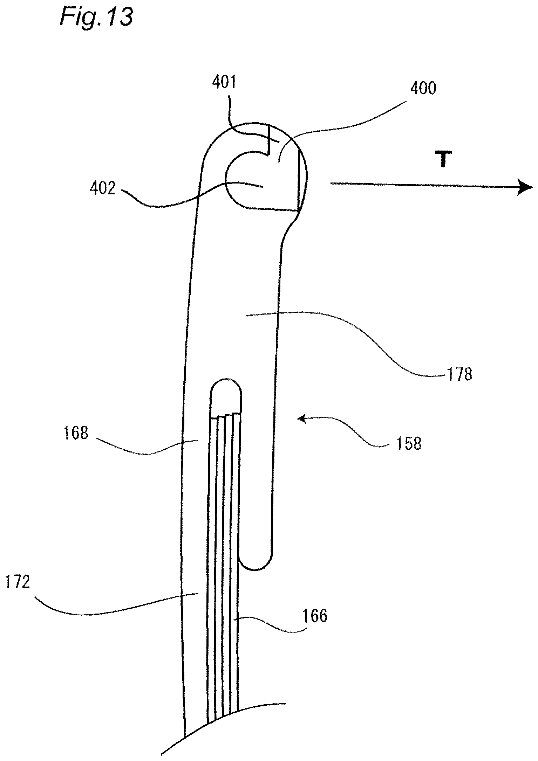

In the illustrated embodiment, the first jig mounting portion 300 is a groove that has an opening facing in the direction of arrow X in FIG. 6; however, the present invention is not limited to such a configuration and the first jig mounting portion may be an L-shaped groove 400. FIG. 13 shows a contact portion 178 of a tensioner 158 according to another embodiment. The portions of the first jig mounting portion 300 other than the groove 400 are the same as in the embodiment illustrated above and are thus labeled with the same numerals. The groove 400 includes a first groove portion 401 extending in direction H, in which the contact portion 178 extends, and a second groove portion 402 extending in direction T that crosses the first groove 401 and away from the plate portion 172 toward the leaf spring 166.

In the illustrated embodiment, the jig is a separate member from the tensioner and the engine; however, the present invention is not limited to such a configuration. In the present invention, the functions of a jig may be incorporated into a portion of the tensioner or engine.

For example, a jig shaped like a hook may be provided on the contact portion 178 of the tensioner 158. In such implementations, when the tensioner 158 is mounted to the engine, the hook-shaped jig is hooked to the front end of the cylinder head 128. At this time, the tensioner 158 extends in a front-to-rear direction. At this time, the cylinder head 128 serves as part of the jig. Then, similar to the embodiment illustrated above, the cam chain 154 is wound around the second sprocket 146 and the second sprocket 146 is attached to the camshaft 142. The hook-shaped jig is then removed from the front end of the cylinder head 128. At this time, the front end of the tensioner 158 is moved rearward to increase the curvature of the tensioner 158 such that the tensioner 158 tensions the cam chain 154. The jig may be a separate member from the contact member 178 or may be formed integrally therewith.

In the illustrated embodiment, the tensioner 158 is extended to allow the jig to be mounted; however, the present invention is not limited to such a configuration. In the present invention, the tensioner 158 may be extended by operating a jig. For example, the tensioner 158 may be extended by rotating a bolt supported in a bolt hole provided in the tensioner 158. In such implementations, it is preferable that the bolt is also supported by the cylinder head 128 or cylinder body 126. Also, in such implementations, the operating portion of the bolt preferably protrudes from the cylinder head 128 or cylinder body 126 to the outside. In this example, operating the jig switches the tensioner between the state where the tensioner 158 tensions the cam chain 154 and the state where the tensioner 158 does not tension the cam chain 154.

### <Features of Embodiment>

Features of the embodiment will be described below.

In the illustrated embodiment, the tensioner 158 may be extended by the jig 200. Thus, the tensioner 158 does not tension the cam chain 154 when the tensioner 158 is mounted to the engine 44. This allows the cam chain 154 to be easily mounted to the engine 44. Thus, even in an engine 44 including a cylinder head 128 that does not have a sidewall that can be opened, the cam chain 154 may be easily wound around the second sprocket 146 when the jig 200 is mounted to the tensioner 158.

In the illustrated embodiment, the first jig mounting portion 300 has an opening facing in a direction that crosses a direction in which the tensioner 158 extends, more particularly in the direction of arrow E in FIG. 9. Thus, the first support portion 202 may be easily removed from the first jig mounting portion 300 by sliding the first support portion 202 in the direction of arrow E in FIG. 9. Thus, the jig 200 may be easily removed from the tensioner 158.

Although embodiments of the present invention have been described, the above embodiments are merely examples for carrying out the present invention. Thus, the present invention is not limited to the above embodiments, and the above embodiments may be modified.

## Claims

1. An engine (44), comprising:
a crankshaft (56);
a camshaft (142);
a first sprocket (108) attached to the crankshaft (56);
a second sprocket (146) attached to the camshaft (142);
a crankcase (84);
a cylinder body (126);
a cylinder head (128);
a head cover (130);
a chain (154) wound around the first sprocket (108) and the second sprocket (146); and
a tensioning member (158) for tensioning the chain (154), the tensioning member (158) comprising:
a leaf spring (166) configured to be curved when no external force is applied thereto; and
a contact member (168) configured to support the leaf spring (166);
the contact member (168) including:
a contact/support portion (172) extending along the leaf spring (166) and being in contact with the leaf spring (166);
a first end portion (178) supporting one end of the leaf spring (166);
a second end portion (176) supporting another end of the leaf spring (166); and
wherein the engine (44) further includes:
a support shaft (164) inserted into a support hole (250) provided in the tensioning member (158) for swingably supporting the tensioning member (158); and
a slide/support member contactable with the first end portion (178) to support an end of the tensioning member (158) in such a way that the end is slidable, wherein the crankcase (84) contains the first sprocket (108);
the cylinder body (126) is attached to the crankcase (84);
the cylinder head (128) is attached to the cylinder body (126) and contains the second sprocket (146);
the head cover (130) is attached to the cylinder head (128);
the crankcase (84), the cylinder body (126) and the cylinder head (128) form a chain room (210) containing the tensioning member (158) and the chain (154);
the cylinder body (126) includes a portion (194) forming part of the chain room (210);
the support shaft (164) is attached to the crankcase (84); **characterized in that** the contact member (168) comprises a jig mounting means (300,302) to which a jig (200) is capable of being mounted for reducing the curvature of the leaf spring (166), the slide/support member is provided in the cylinder head (128);
the jig mounting means includes a first jig mounting portion (300) and a second jig mounting portion (302);
the first jig mounting portion (300) is provided closer to the first end portion (178) than a center of the tensioning member (158) as measured in a length direction is, and is configured to have the jig (200) mounted thereto;
the second jig mounting portion (302) is provided closer to the second end portion (176) than the center of the tensioning member (158) as measured in a length direction is, and is configured to have the jig (200) mounted thereto, and the jig mounting portions (300,302) are configured for positioning at least a portion of the jig (200) outside the portion (194) of the cylinder body forming part of the chain room when the tensioning member (158) is located in the portion (194) of the cylinder body forming part of the chain room with the jig mounted to the jig mounting portions.

2. The engine (44) according to claim 1, wherein: the first jig mounting portion (300) has an opening (301) having an opening facing in a direction (X) crossing a direction (Y) in which the leaf spring (166) extends.

3. The engine (44) according to claim 1 or 2, wherein: the first jig mounting portion (300) is provided at the first end portion (178), and the second jig mounting portion (302) is provided at the second end portion (176).

4. The engine (44) according to any one of claims 1 to 3, wherein: a third direction end of the tensioning member (158) is located further in a third direction than the cylinder head (128) is, the third direction being a direction from the cylinder body (126) toward the cylinder head (128).

5. A straddle type vehicle comprising the engine (44) according to any one of claims 1 to 4.

6. A method of mounting the tensioning member (158) and the chain (154) to the chain room (210) of the engine (44) according to any one of claims 1 to 4, comprising:
a first step of fitting together the crankcase (84), the cylinder body (126), and the cylinder head (128) so as to form the chain room (210) including the crankcase (84), the cylinder body (126) and the cylinder head (128),
a second step of winding the chain (154) around the first sprocket (108);
a third step of assembling a tensioning member assembly by mounting the jig (200) to the tensioning member (158), wherein the jig (200) includes a first support portion (202) configured to support the first jig mounting portion (300), a second support portion (204) configured to support the second jig mounting portion (302), and a body portion (206) configured to connect the first support portion (202) and the second support portion (204), the body portion (206) extending in a direction (Y) in which the leaf spring (166) extends;
a fourth step of inserting the tensioning member assembly in a direction away from the crankcase (84) toward the cylinder body (126) and inserting a support shaft (164) into a support hole (250) provided in the contact member (168) to swingably attach the tensioning member assembly to the crankcase (84);
a fifth step of winding the chain (154) around the second sprocket (146);
a sixth step of attaching, to the camshaft (142), the second sprocket (146) around which the chain (154) is wound; and
a seventh step of removing the jig (200) from the tensioning member (158).

7. The method according to claim 6, wherein:
the body portion (206) is located close to one of sides of the tensioning member (158) disposed in a width direction of the tensioning member (158);
the first support portion (202) is a projection protruding in a direction away from the body portion (206) toward the tensioning member (158);
the first jig mounting portion (300) is a groove having a depth greater than a length of protrusion of the first support portion (202) as measured in a width direction of the leaf spring (166) and extending from one end toward another of the first end portion (178) as measured in a width direction of the contact/support portion (172); and
the seventh step includes the step of moving the first support portion (202) along the groove to eliminate support of the first supported portion by the first support portion (202).

## Patentansprüche

1. Ein Motor (44), der umfasst:
eine Kurbel-Welle (56);
eine Nocken-Welle (142);
ein erstes Ketten-Rad (108), das an der Kurbel-Welle (56) angebracht ist;
ein zweites Ketten-Rad (146), das an der Nocken-Welle (142) angebracht ist;
ein Kurbel-Gehäuse (84);
einen Zylinder-Körper (126);
einen Zylinder-Kopf (128);
eine Kopf-Abdeckung (130);
eine Kette (154), die um das erste Ketten-Rad (108) und das zweite Ketten-Rad (146) gewickelt ist; und
ein Spann-Element (158), zum Spannen der Kette (154), das Spann-Element (158) umfasst:
eine Blatt-Feder (166), die konfiguriert ist, um gekrümmt zu sein, wenn keine externe Kraft darauf aufgebracht ist; und
ein Kontakt-Element (168), das konfiguriert ist, um die Blatt-Feder (166) zu lagern;
das Kontakt-Element (168) beinhaltet:
einen Kontakt/Lager-Abschnitt (172), der sich entlang der Blatt-Feder (166) erstreckt und
in Kontakt mit der Blatt-Feder (166) ist;
einen ersten Endabschnitt (178), welcher ein Ende der Blatt-Feder (166) lagert;
einen zweiten Endabschnitt (176), welcher das andere Ende der Blatt-Feder (166) lagert; und
wobei der Motor (44) weiter beinhaltet:
eine Lager-Welle (164), welche in ein Lager-Loch (52) eingesetzt ist, das in dem Spann-Element (158) vorgesehen ist, zum schwenkbaren Lagern des Spann-Elements (158), und
ein Gleit/Lager-Element, das mit dem ersten Endabschnitt (178) in Kontakt bringbar ist, um ein Ende des Spann-Elements (158) zu lagern, in so einer Weise, dass das Ende gleitbar ist, wobei das Kurbel-Gehäuse (84), das erste Ketten-Rad (108) beinhaltet;
der Zylinder-Körper (126) ist an dem Kurbel-Gehäuse (84) angebracht;
der Zylinder-Kopf (128) ist an dem Zylinder-Körper (126) angebracht und beinhaltet das zweite Ketten-Rad (146);
die Kopf-Abdeckung (130) ist an dem Zylinder-Kopf (128) angebracht;
das Kurbel-Gehäuse (84), der Zylinder-Körper (126) und der Zylinder-Kopf (128) bilden einen Ketten-Raum (210), welcher das Spann-Element (158) und die Kette (154) beinhaltet;
der Zylinder-Körper (126) beinhaltet einen Abschnitt (194), der einen Teil des Ketten-Raums (110) bildet;
die Lager-Welle (164) ist an dem Kurbel-Gehäuse (84) angebracht;
**dadurch gekennzeichnet, dass**
das Kontakt-Element (168) eine Spannvorrichtungs-Montage-Einrichtung (300, 302) beinhaltet, an welche eine Spannvorrichtung (200) in der Lage ist, montiert zu werden,
zur Verringerung der Krümmung der Blatt-Feder (166),
das Gleit/Lager-Element ist dem Zylinder-Kopf (128) vorgesehen;
die Spannvorrichtungs-Montage-Einrichtung beinhaltet einen ersten Spannvorrichtungs-Montage-Abschnitt (300) und einen zweiten Spannvorrichtungs-Montage-Abschnitt (302);
der erste Spannvorrichtungs-Montage-Abschnitt (300) ist näher zu dem ersten Endabschnitt (178) als zu einer Mitte des Spann-Elements (158) vorgesehen, gemessen in einer Längsrichtung, und ist konfiguriert, um die Spannvorrichtung (200) daran montiert zu haben;
der zweite Spannvorrichtungs-Montage-Abschnitt (302) ist näher zu dem zweiten Endabschnitt (176) als die Mitte des Spann-Elements (158) vorgesehen, gemessen in einer Längsrichtung, und ist konfiguriert, um die Spannvorrichtung (200) daran montiert zu haben, und die Spannvorrichtungs-Montage-Abschnitte (300, 302) sind konfiguriert zum Positionieren von zumindest einem Abschnitt der Spannvorrichtung (200) außerhalb des Abschnitts (194) des Zylinder-Körper-Ausbildungsteils des Ketten-Raums, wenn das Spann-Element (158) in dem Abschnitt (194) des Zylinder-Körper-Ausbildungsteils des Ketten-Raums angeordnet ist, mit der Spannvorrichtung, montiert an den Spannvorrichtungs-Montage-Abschnitten.

2. Der Motor (44) gemäß Anspruch 1, wobei: der erste Spannvorrichtungs-Montage-Abschnitt (300) eine Öffnung (301) hat, die einer Öffnung zugewandt ist, in einer Richtung (X), quer zu einer Richtung (Y) in welcher sich die Blatt-Feder (166) erstreckt.

3. Der Motor (44) gemäß Anspruch 1 oder 2, wobei: der Spannvorrichtungs-Montage-Abschnitt (300) an dem ersten Endabschnitt (178) vorgesehen ist, und der zweite Spannvorrichtungs-Montage-Abschnitt (302) ist an dem zweiten Endabschnitt (176) vorgesehen.

4. Der Motor (44) gemäß irgendeinem der Ansprüche 1 bis 3, wobei: ein drittes Richtungs-Ende des Spann-Elements (158) weiter in einer dritten Richtung angeordnet ist, als der Zylinder-Kopf (128), die dritte Richtung ist eine Richtung von dem Zylinder-Körper (126) zu dem Zylinder-Kopf (128).

5. Ein Spreiz-Sitz-Typ-Fahrzeug, das den Motor (44) gemäß zu irgendeinem der Ansprüche 1 bis 4 umfasst.

6. Ein Verfahren zum Montieren des Spann-Elements (158) und der Kette (154) in einem Ketten-Raum (210) des Motors (44) gemäß zu irgendeinem der Ansprüche 1 bis 4, das umfasst:
einen ersten Schritt des Zusammenbaus des Kurbel-Gehäuses (84), des ZylinderKörpers (126) und des Zylinder-Kopfs (128), um so den Ketten-Raum (210) zu bilden,
beinhaltend das Kurbel-Gehäuse (84), den Zylinder-Körper (126) und den Zylinder-Kopf (128),
einen zweiten Schritt des Wickelns der Kette (154) um das erste Ketten-Rad (108);
einen dritten Schritt des Zusammenbaus einer Spann-Element-Anordnung durch Montieren der Spannvorrichtung (200) an dem Spann-Element (158), wobei die Spannvorrichtung (200) einen ersten Lagerabschnitt (202), der konfiguriert ist, um den ersten Spannvorrichtungs-Montage-Abschnitt (300) zu lagern, einen zweiten Lagerabschnitt (204), der konfiguriert ist, um den zweiten Spannvorrichtungs-Montage-Abschnitt zu lagern, und einen Körperabschnitt (206), der konfiguriert ist, um den ersten Lagerabschnitt (202) und den zweiten Lagerabschnitt (204) zu verbinden, beinhaltet, der Körperabschnitt (206) erstreckt sich in eine Richtung (Y) in welche sich die Blatt-Feder (166) erstreckt;
einen vierten Schritt des Einsetzens der Spann-Element-Anordnung in eine Richtung weg von dem Kurbel-Gehäuse (84) zu dem Zylinder-Körper (126) und einsetzen einer Lager-Welle (164) in ein Lager-Loch (250), das in dem Kontakt-Element (168) vorgesehen ist, um die Spann-Element-Anordnung schwenkbar an dem Kurbel-Gehäuse (84) anzubringen;
einen fünften Schritt des Wickelns der Kette (154) um das zweite Ketten-Rad (146);
einen sechsten Schritt des Anbringens des zweiten Ketten-Rads (146), um welches die Kette (154) gewickelt ist, an der Nocken-Welle (142); und
einen siebten Schritt des Entfernens der Spannvorrichtung (200) von dem Spann-Element (158).

7. Das Verfahren gemäß Anspruch 6, wobei:
der Körperabschnitt (206) nahezu der einen Seiten des Spann-Elements (158) angeordnet ist, das in einer Breiten-Richtung des Spann-Elements (158) positioniert ist;
der erste Lagerabschnitt (202) ist ein Vorsprung der in eine Richtung weg von dem Körperabschnitt (206) zu dem Spann-Element (158) vorsteht;
der erste Spannvorrichtungs-Montage-Abschnitt (300) ist eine Nut die eine Tiefe hat, größer als eine Länge des Vorsprungs des ersten Lagerabschnitts (202), gemessen in eine Breiten-Richtung der Blatt-Feder (166), und sich von einem Ende zu dem anderen von dem ersten Endabschnitt (178), gemessen in eine Breiten-Richtung des Kontakt/Lager-Abschnitts (172), erstreckt; und der siebte Schritt beinhaltet den Schritt des Bewegens des ersten Lagerabschnitts (202) entlang der Nut, um Lagerung des ersten gelagerten Abschnitts durch ersten Lagerabschnitt (202) zu entfernen.

## Revendications

1. Moteur (44) comprenant :
un vilebrequin (56) ;
un arbre à cames (142) ;
un premier pignon (108) attaché au vilebrequin (56) ;
un deuxième pignon (146) attaché à l'arbre à cames (142) ;
un carter (84) ;
un corps de cylindre (126) ;
une culasse (128) ;
un couvre-culasse (130) ;
une chaîne (154) enroulée autour du premier pignon (108) et du deuxième pignon (146) ; et
un tendeur (158) pour tendre la chaîne (154), le tendeur (158) comprenant :
un ressort à lame (166) configuré pour être cintré quand aucune force externe n'y est appliquée ; et
un élément de contact (168) configuré pour supporter le ressort à lame (166) ;
l'élément de contact (168) incluant :
une portion de contact/support (172) qui s'étend le long du ressort à lame (166) et en contact avec le ressort à lame (166) ;
une première portion d'extrémité (178) qui supporte une extrémité du ressort à lame (166) ;
une deuxième portion d'extrémité (176) qui supporte une autre extrémité du ressort à lame (166) ; et
dans lequel le moteur (44) comprend en outre :
un arbre de support (164) inséré dans un trou de support (250) pourvu dans le tendeur (158) pour supporter le tendeur (158) de manière pendulaire ; et
un élément coulissant / de support qui peut être mis en contact avec la première portion d'extrémité (178) pour supporter une extrémité du tendeur (158) de telle sorte que l'extrémité est coulissante,
dans lequel
le carter (84) contient le premier pignon (108) ;
le corps de cylindre (126) est attaché au carter (84) ;
la tête de cylindre (128) est attachée au corps de cylindre (126) et contient le deuxième pignon (146) ;
le couvre-culasse (130) est attaché à la culasse (128) ;
le carter (84), le corps de cylindre (126) et la tête de cylindre (128) forment une chambre de chaîne (210) contenant le tendeur (158) et la chaîne (154) ;
le corps de cylindre (126) comprend une portion (194) formant partie de la chambre de chaîne (210) ;
l'arbre de support (164) est attaché au carter (84) ;
**caractérisé en ce que** l'élément de contact (168) comprend un moyen de montage de gabarit (300, 302) auquel peut être monté un gabarit (200) pour réduire la courbure du ressort à lame (166),
l'élément coulissant / de support est pourvu dans la culasse (128) ;
le moyen de montage de gabarit comprend une première portion de montage de gabarit (300) et une deuxième portion de montage de gabarit (302) ;
la première portion de montage de gabarit (300) est pourvue plus près de la première portion d'extrémité (178) en direction de la longueur que le centre du tendeur (158), et est configurée pour que le gabarit (200) y soit monté ;
la deuxième portion de montage de gabarit (302) est pourvue plus près de la deuxième portion d'extrémité (176) en direction de la longueur que le centre du tendeur (158), et est configurée pour que le gabarit (200) y soit monté, et les portions de montage de gabarit (300,302) sont configurées pour positionner au moins une portion du gabarit (200) à l'extérieur de la portion (194) du corps de cylindre formant partie de la chambre de chaîne quand le tendeur (158) est positionné dans la portion (194) du corps de cylindre formant partie de la chambre de chaîne avec le gabarit monté aux portions de montage de gabarit.

2. Moteur (44) selon la revendication 1, dans lequel :
la première portion de montage de gabarit (300) présente une ouverture (301) ayant une ouverture en direction (X) qui intersecte une direction (Y) dans laquelle s'étend le ressort à lame (166).

3. Moteur (44) selon la revendication 1 ou 2, dans lequel :
la première portion de montage de gabarit (300) est pourvue sur la première portion d'extrémité (178), et
la deuxième portion de montage de gabarit (302) est pourvue sur la deuxième portion d'extrémité (176).

4. Moteur (44) selon l'une quelconque des revendications 1 à 3, dans lequel :
une extrémité du tendeur en troisième direction (158) est positionnée plus loin dans une troisième direction que la culasse (128), la troisième direction étant une direction depuis le corps de cylindre (126) vers la culasse (128).

5. Véhicule de type à enfourcher comprenant le moteur (44) selon l'une quelconque des revendications 1 à 4.

6. Procédé de montage du tendeur (158) et de la chaîne (154) dans la chambre de chaîne (210) du moteur (44) selon l'une quelconque des revendications 1 à 4, comprenant :
une première étape d'assemblage du carter (84), du corps de cylindre (126) et de la culasse (128) de manière à former la chambre de chaîne (210) incluant le carter (84), le corps de cylindre (126) et la culasse (128),
une deuxième étape d'enroulement de la chaîne (154) autour du premier pignon (108) ;
une troisième étape d'assemblage d'un assemblage de tendeur en montant le gabarit (200) sur le tendeur (158), dans lequel le gabarit (200) comprend une première portion de support (202) configurée pour supporter la première portion de montage de gabarit (300), une deuxième portion de support (204) configurée pour supporter la deuxième portion de montage de gabarit (302), et une portion de corps (206) configurée pour connecter la première portion de support (202) et la deuxième portion de support (204), la portion de corps (206) s'étendant dans une direction (Y) dans laquelle s'étend le ressort à lame (166) ;
une quatrième étape d'insertion de l'assemblage de tendeur dans une direction qui s'éloigne du carter (84) vers le corps de cylindre (126) et d'insertion d'un arbre de support (164) dans un trou de support (250) pourvu dans l'élément de contact (168) pour attacher l'assemblage de tendeur de manière pendulaire au carter (84) ;
une cinquième étape d'enroulement de la chaîne (154) autour du deuxième pignon (146) ;
une sixième étape d'attachement, à l'arbre à cames (142), du deuxième pignon (146) autour duquel la chaîne (154) est enroulée ; et
une septième étape d'enlèvement du gabarit (200) du tendeur (158).

7. Procédé selon la revendication 6, dans lequel :
la portion de corps (206) est positionnée près d'un des côtés du tendeur (158) disposé en direction de la largeur du tendeur (158) ;
la première portion de support (202) est une projection qui fait saillie dans une direction qui s'éloigne de la portion de corps (206) vers le tendeur (158) ;
la première portion de montage de gabarit (300) est une rainure qui présente une profondeur supérieure à une longueur de protrusion de la première portion de support (202) lorsqu'elle est mesurée en direction de la largeur du ressort à lame (166) et qui s'étend d'une extrémité à une autre de la première portion d'extrémité (178) lorsqu'elle est mesurée en direction de la largeur de la portion de contact/support (172) ; et
la septième étape comprend l'étape de déplacement de la première portion de support (202) le long de la rainure pour éliminer le support de la première portion supportée par la première portion de support (202).
